# EUROPEAN PATENT SPECIFICATION

(11) **EP 2 168 185 B1**
(45) Date of publication and mention of the grant of the patent: **13.11.2019**
(21) Application number: 08772059.5
(22) Date of filing: 26.06.2008
(51) Int. Cl.: H01M 8/0247, H01M 8/241, H01M 8/0258, H01M 8/0271, H01M 8/0273, H01M 8/2465, H01M 8/0202, H01M 8/0267, H01M 8/0284, H01M 8/04089, H01M 8/0276, H01M 8/1018, H01M 8/0297

(54) **FUEL CELL STACKS AND METHODS**
BRENNSTOFFZELLENSTAPEL UND VERFAHREN
EMPILEMENTS DE PILES À COMBUSTIBLE ET PROCÉDÉS

(30) Priority: 28.06.2007 US 823759; 28.06.2007 US 823743
(43) Date of publication of application: 31.03.2010
(73) Proprietor: Ballard Unmanned Systems Inc., Southborough, MA 01772-1034 (US)
(72) Inventor: VITELLA, Thomas, Franklin, MA 02038 (US); BALDIC, Jeff, Milford, MA 01757 (US); REZAC, Ronald, Bolton, MA 01740 (US); LAUDER, Nick, Newtonville, MA 02460 (US); AVIS, Seth, Chestnut Hill, MA 02467 (US); OSENAR, Paul, Westford, MA 01886 (US)
(74) Representative: Adam, Holger
(86) International application number: PCT/US2008/068383
(87) International publication number: WO 2009/006220

(56) References cited:
- WO-A2-03/092096
- US-A- 5 750 281
- US-A1- 2002 055 032
- US-A1- 2005 244 703
- US-B1- 6 596 427
- US-B2- 6 887 610
- US-B2- 7 052 796

## Description

### BACKGROUND OF THE INVENTION

### Field of the Invention

The present invention relates to a fuel cell stack for generating electrical energy. Particularly, the present invention is directed to a fuel cell stack including a layer of encapsulating material.

### Description of Related Art

Membrane based electrochemical cells, and particularly, proton exchange membrane (PEM) fuel cells are well known. PEM fuel cells convert chemical energy to electrical power with virtually no environmental emissions and differ from a battery in that energy is not stored, but derived from supplied fuel. Therefore, a fuel cell is not tied to a charge/discharge cycle and can maintain a specific power output as long as fuel is continuously supplied. Significant funds have been invested in fuel cell research and commercialization, indicating that the technology has considerable potential in the marketplace. However, the high cost of fuel cells as compared to conventional power generation technology deters their widespread use. The cost of fabricating and assembling fuel cells can be significant due to the materials and labor involved. Indeed, as much as 85% of a fuel cell's cost can be attributed to manufacturing.

In general, a single cell PEM fuel cell consists of an anode and a cathode compartment separated by a thin, ionically conducting membrane. This catalyzed membrane, with or without gas diffusion layers, is often referred to as a membrane electrode assembly (MEA). Energy conversion begins when the reactants, reductants and oxidants, are supplied to the anode and cathode compartments, respectively, of the PEM fuel cell. Oxidants include pure oxygen, oxygen-containing gases, such as air, and halogens, such as chlorine. Reductants, also referred to herein as fuel, include hydrogen, natural gas, methane, ethane, propane, butane, formaldehyde, methanol, ethanol, alcohol blends and other hydrogen rich organics. At the anode, the reductant is oxidized to produce protons, which migrate across the membrane to the cathode. At the cathode, the protons react with the oxidant. The overall electrochemical redox (reduction/ oxidation) reaction is spontaneous, and energy is released. Throughout this reaction, the PEM serves to prevent the reductant and oxidant from mixing and to allow ionic transport to occur.

Current state of the art fuel cell designs comprise more than a single cell, and in fact, generally combine several MEAs, flow fields and separator plates in a series to form a fuel cell "stack"; thereby providing higher voltages and the significant power outputs needed for most commercial applications. Flow fields allow for the distribution of reactants through the fuel cell and are typically separate from the porous electrode layers within the fuel cell. Depending on stack configuration, one or more separator plates may be utilized as part of the stack design to prevent mixing of the fuel, oxidant and cooling streams within the fuel cell stack. Such separator plates can also provide structural support to the stack.

Bipolar plates perform the same function as an oxidant flow field, fuel flow field and separator plate in combination and are often used in the design of fuel cells as their use can reduce the number of components required in the functioning fuel cell. These bipolar plates contain an array of channels formed in the surface of the plate contacting an MEA, which function as the flow fields. The lands conduct current from the electrodes while the channels between the lands serve to distribute the reactants utilized by the fuel cell and facilitate removal of reaction by-products, such as water. Fuel is distributed from the fuel inlet port to the fuel outlet port, as directed by the channels, on one face of the bipolar plate, while oxidant is distributed from the oxidant inlet port to the oxidant outlet port, as directed by the channels, on the opposing face of the bipolar plate, and the two faces are not connected through the plate. The particular design of the bipolar plate flow field channels may be optimized for the operational parameters of the fuel cell stack, such as temperature, power output, gas humidification and flow rate. Ideal bipolar plates for use in fuel cell stacks are thin, lightweight, durable, highly conductive, corrosion resistant structures such as carbon/polymer composites or graphite. In the fuel cell stack, each bipolar plate serves to distribute fuel to one MEA of the stack through its fuel flow field face while distributing oxidant to a second MEA through the opposite oxidant flow field face. A thin sheet of porous paper, cloth or felt, usually made from graphite or carbon, may be positioned between each of the flow fields and the catalyzed faces of the MEA to support the MEA where it confronts grooves in the flow field to conduct current to the adjacent lands, and to aid in distributing reactants to the MEA. This thin sheet is normally termed a gas diffusion layer (GDL) and can be incorporated as part of the MEA.

Of necessity, certain stack components, such as the GDL portion of the MEA, are porous in order to provide for the distribution of reactants and byproducts into, out of, and within the fuel cell stack. Due to the porosity of elements within the stack, a means to prevent leakage of any liquid or gases between stack components (or outside of the stack) as well as to prevent drying out of the various stack elements due to exposure to the environment is also needed. To this end, gaskets or other seals are usually provided between the surfaces of the MEA or PEM and other stack components and on portions of the stack periphery. These sealing means, whether composed of elastomeric or adhesive materials, are generally placed upon, fitted, formed or directly applied to the particular surfaces being sealed. These processes are labor intensive and not conducive to high volume manufacturing, thereby adding to the high cost of fuel cells. Additionally, the variability of these processes results in poor manufacturing yield and poor device reliability.

Fuel cell stacks may also contain humidification channels within one or more of the coolant flow fields. These humidification channels provide a mechanism to humidify fuel and oxidants at a temperature as close as possible to the operating temperature of the fuel cell. This helps to prevent dehydration of the PEM as a high temperature differential between the gases entering the fuel cell and the temperature of the PEM causes water vapor to be transferred from the PEM to the fuel and oxidant streams.

Fuel cell stacks range in design depending upon power output, cooling, and other technical requirements, but may utilize a multitude of MEAs, seals, flow fields and separator plates, in intricate assemblies that result in manufacturing difficulties and further increased fuel cell costs. These multitudes of individual components are typically assembled into one sole complex unit. The fuel cell stack is formed by compressing the unit, generally through the use of end plates and bolts, although banding or other methods may be used, such that the gaskets seal and the stack components are held tightly together to maintain electrical contact there between. These conventional means of applying compression add even more components and complexity to the stack and pose additional sealing requirements.

Various attempts have been made in the fuel cell art to address these deficiencies in fuel cell stack assembly design and thereby lower manufacturing costs. However, most stack assembly designs still require manual alignment of the components, active placement of the sealing means and/or a multi-step process, each of which presents notable disadvantages in practice. See, e.g., the processes described in U.S. Patent No. 6,080,503, to Schmid et al., U.S. Patent No. 4,397,917, to Chi et al., and U.S. Patent No. 5,176,966, to Epp et al.

Additionally, in traditional fuel cell cassettes, two types of MEAs dominate; MEAs in which 1) the membrane extends beyond the borders of the gas diffusion layers, and 2) gasket materials are formed into the edges of the MEA itself with the membrane and GDLs approximately of the same size and shape (see, e.g., US 6,423,439 to Ballard). In the first type, separate gaskets are used to seal between the membrane edge extending beyond the GDL and the other part of the stack (bipolar plates). In the second type, the gasket of the MEA seals directly to the other parts of the stack. Each of these methods requires compression to make a seal. These compressive-based seals require that all the components in the stack have high precision such that a uniform load is maintained. MEA suppliers have become accustomed to supplying the MEA formats above.

Various conventional stacks for use in fuel cells and other electrochemical applications utilize an internal manifold design with compression-based seals. However, there are notable drawbacks associated with that architecture. For instance, using a conventionally-sealed, internally manifolded stack there is a significant area that is sacrificed in sealing around the MEA and internal manifolds. One solution is to locate some or all of the manifolds external to the stack. However, other difficulties are observed in many stacks with external manifold designs, such as difficulty sealing between the manifold and the stack. As in traditional stacks, sealing is typically accomplished with gaskets and compression. Unfortunately, gasket / compression based seals have a number of inherent drawbacks, including a sensitivity to thermal cycling, requirements of uniform compression and associated hardware, high tolerance parts, and delicate assembly requirements.

Still other attempts have been made to improve upon fuel cell design and performance. For instance, US 4,212,929 describes an improved sealing method for fuel cell stacks. That patent reports a sealing system that utilizes a polymer seal frame clamped between the manifold and the stack. As described, the seal frame moves with the stack and the leak rate associated with a typical manifold seal is reduced during compression. US 5,514,487 and US 5,750,281 both describe an edge manifold assembly that comprises a number of manifold plates. The plates are mounted on opposite sides of the fuel cell stack and function in such a way to selectively direct the reactant and coolant streams along the perimeter of the stack. While these designs offer limited improvements to other conventional assemblies, they are generally unsuitable for high-volume manufacture.

Recognizing these and other deficiencies in the art, the Assignee of this application has developed a series of innovative methods for sealing manifold ports within the stack or a module thereof, as well as methods for sealing the stack or module periphery that are less labor intensive and more suitable to high-volume manufacturing processes (see World Publication WO 03/036747). That publication discloses a 'one-shot' assembly of fuel cell stacks (and other electrochemical devices) in which all of the component parts are assembled into a mold without gaskets. A resin is introduced into the mold and this resin selectively penetrates certain portions of the assembly either by resin transfer molding or injection molding techniques. Upon hardening, that resin seals the components and defines all the manifold channels within the stack. The net effect is to replace the gaskets of the traditional stack with adhesive based seals, introduced after the assembly of the components.

In another previous patent application, the Assignee of this application reported on an innovative fuel cell stack design which assembles together individual modules to form a fuel cell stack of requisite power output where each module permanently binds a number of unit cells together (see World Publication WO 02/43173).

The assignee also has previously described fuel cells having an MEA in which the GDL and membrane were more or less of the same general outline as each other and of the overall stack profile (WO 03/092096 A2 and US 2005/0244703 A1). A major advantage of that technique is the ability to directly use a roll-to-roll MEA without having to do any post processing. However, a substantial portion of the cross-section of each MEA is used for sealing the various manifold openings and periphery of the stack such that only about 50% of the cell cross section is available for the electrochemical reaction.

The assignee also has developed membrane-based electrochemical cells, and more particularly, PEM fuel cell stacks that comprise one or more composite MEAs having a molded gasket about the periphery. The gasket portion of the composite MEA has one or more features capable of regulating the flow of sealant during sealing processes (see World Publication 2004/047210).

Despite these advancements over the prior the art, the Assignee of this application has recognized that further improvements can be made to the technology. The present invention, as embodied herein, presents such improvements.

### SUMMARY OF THE INVENTION

The purpose and advantages of the present invention are set forth in and will become apparent from the description that follows. Additional advantages of the invention will be realized and attained by the methods and systems particularly articulated in the written description and claims hereof, as well as from the appended drawings.

To achieve these and other advantages and in accordance with the purpose of the invention, as embodied herein, the invention includes a fuel cell stack as defined in claim 1 and a method as defined in claim 8. The dependent claims define further embodiments.

The accompanying drawings, which are incorporated in and constitute part of this specification, are included to illustrate and provide a further understanding of the method and system of the invention. Together with the description, the drawings serve to explain the principles of the invention.

### BRIEF DESCRIPTION OF THE DRAWINGS

Fig. 1 is a partially cut-away perspective view of a portion of a first representative embodiment of a bipolar plate assembly and stack made in accordance with the present invention, showing separator plates having raised surfaces surrounding the openings.
Fig. 2 is a partially cut-away perspective view of a portion of a second representative embodiment of a bipolar plate assembly and stack made in accordance with the invention, showing separator plates having raised surfaces surrounding the openings in the form of o-rings.
Fig. 3 is a perspective view of the fuel cell stack of Fig. 2, showing multiple separator plates stacked together.
Fig. 4 is a partial perspective view of a portion of a third representative embodiment of a bipolar plate assembly made in accordance with the present invention, showing raised surfaces surrounding the openings on the separator plate, wherein one ring-shaped raised surface surrounds another ring-shaped raised surface, which surrounds the opening.
Fig. 5 is a partial cut-away perspective view of a fuel cell stack using a separator plate as depicted in Fig. 4, showing the cross section of the raised surfaces defining a tortuous sealant flow path.
Fig. 6 is a partial cut-away perspective view of a portion of the fuel cell stack of Fig. 2, showing an encapsulating material disposed around the manifold portion of the stack.
Fig. 7 is a perspective view of a comparative example of a stack of bipolar plate assemblies, showing openings into the reactant and coolant flow fields on either side of a separator plate.
Fig. 8 is a perspective view of a portion of the bipolar plate assembly of Fig. 7, showing in detail the opening, including an open channel, into the reactant flow field on a separator plate.
Fig. 9 is a perspective view of a portion of the bipolar plate assembly of Fig. 7, showing the coolant flow field, open channel, and opening into the coolant flow field, all defined in one surface of the separator plate.
Fig. 10 is a perspective view of a portion of the fuel cell stack of Fig. 7, showing the membrane electrode assemblies in place on either side of a bipolar plate assembly, as well as plenum molding inserts covering some of the openings in preparation for encapsulating the fuel cell stack in a sealant material.

### DETAILED DESCRIPTION

Reference will now be made in detail to the present preferred embodiments of the invention, examples of which are illustrated in the accompanying drawings. The method and corresponding steps of the invention will be described in conjunction with the detailed description of the system.

The devices and methods presented herein may be used for improving the manufacturability and application of fuel cells. The present invention is particularly suited for lowering the required tolerances, simplifying of fuel cell components, such as reactant and coolant manifolds and minimizing labor requirements.

In accordance with a first embodiment of the invention, a fuel cell stack is provided including at least one bipolar plate assembly that has a first generally planar plate body with a first generally planar face. The first face includes an opening defined by the first plate body for passage of a reactant therethrough. A first reactant flow field is defined on the first face, and a first raised surface on the first face substantially surrounds the opening. The first raised surface is adapted and configured to mate with a second surface on a face of an adjacent bipolar plate assembly, wherein the first raised surface and second surface create a flow obstruction when the raised surfaces are mated. A first membrane electrode assembly is in operable communication with the first reactant flow field. A reactant manifold is in fluid communication with the reactant flow field by way of a first fluid flow path. The reactant manifold is adapted and configured to facilitate transport of a reactant through the fuel cell stack. A layer of encapsulating material is disposed about the separator plate, membrane electrode assembly and reactant manifold. The encapsulating material is substantially prevented from flowing into the opening defined by the first plate body by the flow obstruction.

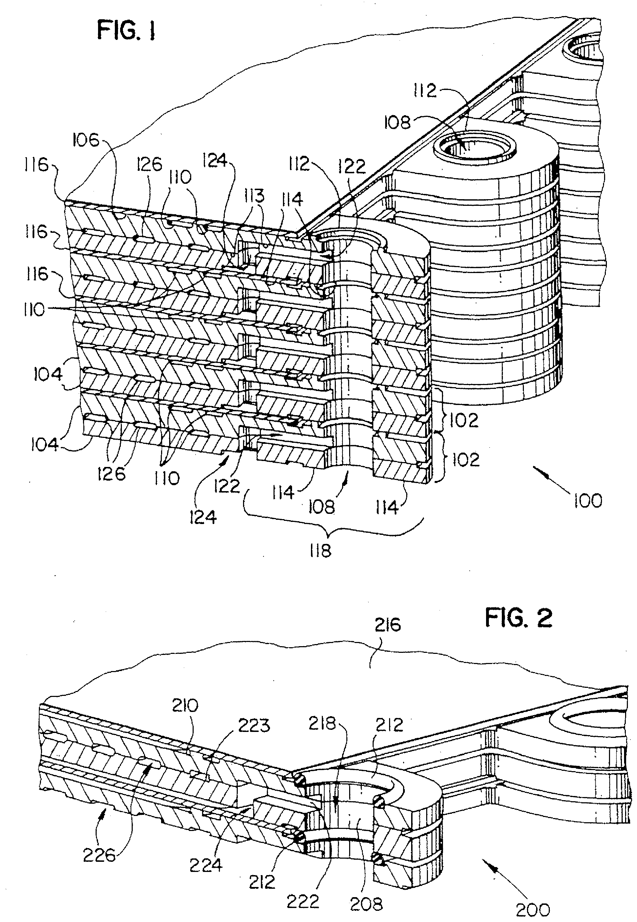

For purpose of explanation and illustration, and not limitation, a partial view of an exemplary embodiment of the fuel cell stack in accordance with the invention is shown in Fig. 1 and is designated generally by reference character 100. Other embodiments of a fuel cell stack in accordance with this embodiment of the invention, or aspects thereof, are provided in Figs. 2-6, as will be described.

In accordance with the invention, at least one bipolar plate assembly 102 is provided having a first generally planar plate body 104. Fig. 1 shows five bipolar plate assemblies 102, including ten individual plate bodies 104, stacked together to make a portion of fuel cell stack 100. Each plate body 104 has a first generally planar face 106. An opening 108 is defined in each plate body 104. Opening 108 is shown as a circular hole in plate body 104, however, any suitable shape can be used for the opening. Openings 108 are designed so that a reactant, such as fuel or an oxidant, can be supplied to the fuel cell stack 100 therethrough.

Each plate body 104 has a reactant flow field, such as fuel flow field 110 or oxidant flow field 124, defined on one side. The other side may optionally define a coolant flow field 126 therein so that when two plate bodies 104 are arranged back to back, they may combine to enclose the coolant flow field 126 between them. Two plate bodies 104 arranged together in this manner comprise a bipolar plate assembly 102. As shown in Fig. 1, bipolar plate assembly 102 has a fuel flow field 110 defined on the top face 106, an oxidant flow field 124 defined on the bottom face 114, and a coolant flow field 126 running throughout the middle of the bipolar plate assembly 102.

As will be appreciated by those of skill in the art, the term separator plate, as described herein, refers to a variety of different types of plates that may be found in a fuel cell stack. For example, separator plates may include bipolar plates in the middle of a fuel cell stack as well as terminal plates located proximate end plates of the stack.

As further depicted in Fig. 1, a raised surface 112 is defined on the first face 106 of each plate body 104 disposed about opening 108. As depicted, raised surface 112 completely surrounds each opening 108, however it is also possible for raised surface 112 to substantially surround opening 108 without completely surrounding it, in accordance with the invention. For example, raised surface 112 may comprise an interrupted surface or otherwise not completely surround opening 108. Raised surface 112 is preferably designed to mate or align with a second surface 114 of an adjacent fuel cell bipolar plate assembly 102, as shown in Fig. 1. When mated, raised surface 112 and second surface 114 cooperate to form a flow obstruction. The flow obstruction functions to prevent encapsulating material from freely flowing into opening 108 during the encapsulation process, as described below.

A variety of different configurations can be used as flow obstructions. As depicted in Fig. 1, raised surfaces 112 are simply ring shaped features surrounding openings 108. Raised surfaces 112 are preferably made of a nonconductive material that is different from the conductive material of the rest of assembly 102, and are affixed to assembly 102 prior to assembly of the stack to reduce part count. In other words, since adjacent bipolar plate assemblies 102 should not be in electrical contact with one another, the material of raised surfaces 112 should provide electrical insulation between adjacent assemblies 102. By way of further example, if desired, a non-conductive coating may be used to maintain isolation. It is also possible to use insulative o-rings in lieu of raised features 112, such as o-rings 212 shown in Figs. 2, 3, and 6. O-rings 212 can be used create a seal around openings 208 and between adjacent separator plates 202, if desired. Preferably, the material of raised surfaces 112/212 is compatible with the encapsulation material (described below) to allow for an adhesive seal between adjacent bipolar plate assemblies 102/202. Raised surfaces 112 can be made from a hard compound or a compressible material. Moreover, raised surface 112 can be a precision-made washer used as a discrete component, or a more conventional washer precisely located and molded into the plate 104 during plate manufacture.

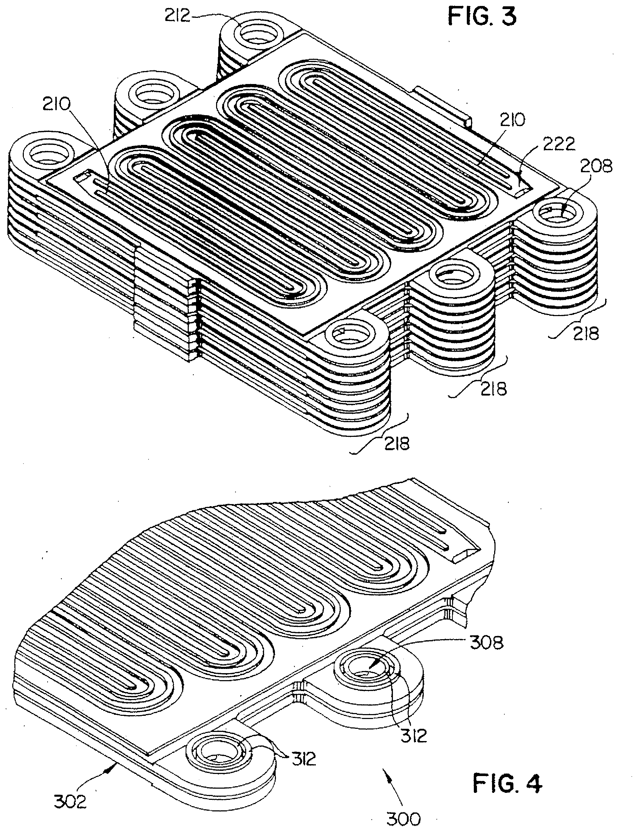

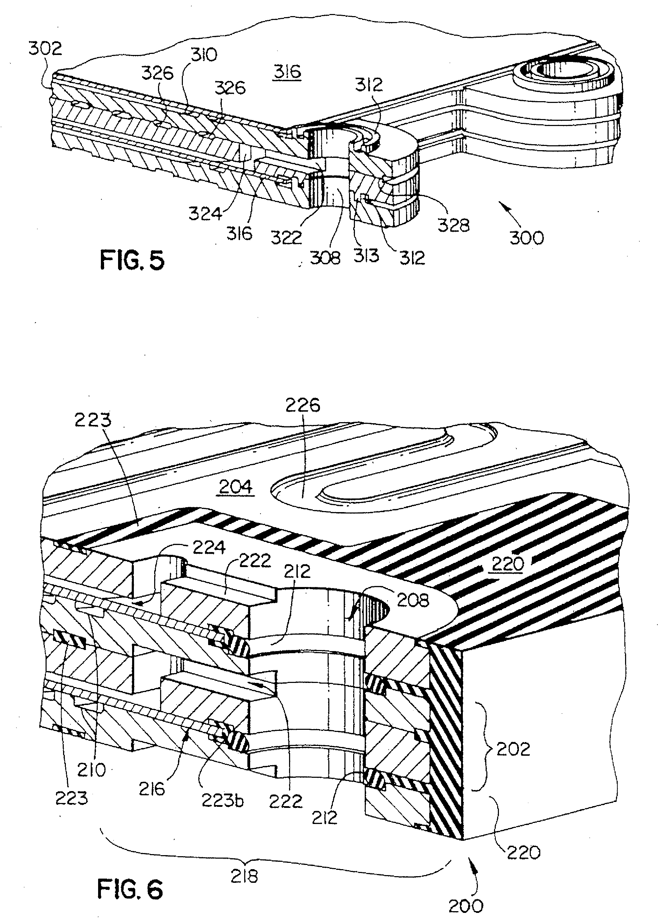

Another example of a flow obstruction in accordance with the invention is shown in Figs. 4 and 5. Raised feature 312 is formed monolithically with plate 302, which simplifies assembly. Raised feature 312 actually includes two raised ring-shaped features, one surrounding the other. However, it is also possible for one or both of the raised ring-shaped features to have an interruption, as long as feature 312 substantially surrounds opening 308. Moreover, it is also possible to use similar features having any suitable shape besides ring-shaped, in accordance with the invention.

A complementary raised feature 313 is formed opposite to raised feature 312 on plate 302. Raised features 312 and 313 of adjacent plates 302 cooperate to create a flow obstruction around opening 308. Since it is undesirable for adjacent plates 302 to be in electrical contact, features 312 and 313 of adjacent plates are preferably made from nonconductive material or have a nonconductive coating disposed thereon. In accordance with another embodiment, the tolerances of features 312, 313 may be configured to maintain a gap between the structures to prevent electrical contact. Encapsulating material later incorporated into the stack may then pass between features 312, 313. During the encapsulation process (described below), the encapsulating material is restricted from freely flowing into opening 308 by the combination of features 312 and 313.

For purposes of illustration and not limitation, as embodied herein and as depicted in Fig. 1, fuel cell stack 100 is further provided with a membrane electrode assembly 116 (hereinafter "MEA" 116). Stack 100 includes an MEA 116 sandwiched between each set of bipolar plate assemblies 102. In a fully assembled cell stack 100, each operational MEA 116 is in fluid contact with an oxidant flow field 124 on one side, and a fuel flow field 110 on its other side. When in operation, oxidant and fuel flow past opposite sides of MEA 116 to produce electrical power as known in the art. Those skilled in the art will readily appreciate that there are numerous suitable materials and configurations for the MEA 116.

In further accordance with the invention, a manifold 118 is provided in fluid communication with each reactant flow field 110, 124, as well as coolant flow field 126. Manifold 118 generally includes openings 108, which when stacked generally define a plenum, as best seen in the cross-section portion of Fig. 1. Each fuel cell bipolar plate assembly 102 includes one or more passages from plenums 108 to a reactant flow field 110, 124 or coolant flow field 126. The passage is defined by a channel 122 in second surface 113 of one plate body 104, and the mating face 113 of the adjoined plate body 104 in a separator plate 102. Channel 122 allows fluid to flow from the cylinder defined by the plenum of openings 108 into or out of oxidant flow field 124 (or fuel flow field 110 on the side opposite that shown in Fig. 1). Similar channels 122 communicate between openings 108 and coolant flow field 126. It is also possible to define channel 122 in each of reciprocally mating faces 113, as in channel 222 shown in Fig. 2.

As shown in Figs. 1-3, each reactant flow field (e.g. 110, 224, 210) flows generally from an opening 108, 208 of a fuel cell bipolar plate assembly 102, 202 to exit at another opening 108, 208 through a path designed to maximize the reactions on MEA 116. However, those skilled in the art will readily appreciate that a path of any suitable shape can be used in accordance with the invention. In this configuration, manifolds 118, 218 allow fuel, oxidant, and coolant to be transported through the fuel cell stack to generate electrical power. Each flow field (fuel, oxidant, and coolant) has a manifold 118, 218 for incoming fluid and a manifold 118, 218 on the opposite side for outgoing fluid, for a total of six manifolds 118, 218. However, those skilled in the art will readily appreciate that other configurations/numbers of manifolds can be used.

For purposes of illustration and not limitation, as embodied herein, system 100 includes a layer of encapsulating material disposed about the separator plate (not shown in Fig. 1). Fig. 6 shows a layer of encapsulating material 220 encasing manifold 218 of a stack 200. During the process of infusing encapsulating material 220 into the periphery of fuel cell stack 200, the flow obstruction (e.g. 112, 212, 312) acts to prevent encapsulating material 220 from freely flowing into opening 108, 208, 308. Thereby each plenum defined by a stack of openings (e.g. 108) is kept free from excess encapsulation material 220, which could otherwise form obstructions within the plenum/manifold to the detriment of the efficiency of the fuel cell stack 100, 200, 300. The flow obstructions 112, 212, 312 ultimately prevent encapsulating material 220 from flowing into channels 122, 222, 322, which could otherwise block the channels and prevent proper operation of the fuel cell stack.

To encapsulate the fuel cell stack (e.g., 200), a resin may be introduced around the periphery, or within injection holes of all assembled components. A vacuum is then pulled through an end plate of the stack through each of the manifold holes within the assembly. The pressure differential introduces resin into the edges of the assembly thereby encapsulating all the edges of the components in the assembly together and forming the assembly into a fuel cell stack as described in U.S. Patent No. 6,946,210. Alternately, the pressure differential may be created by applying pressure to the encapsulant instead of applying vacuum to the fuel cell stack assembly. In addition, the same pressure differential introduces the resin into the spaces, if any, defined between a raised feature (e.g., 112) on a first plate and the surface of an adjacent separator plate.

The pressure differential and time required to accomplish the sealing process is a function of the materials used in the fuel cell cassette construction. These include, for example, the viscosity and flow characteristics of the resin, and the type of gas diffusion layer used in the MEA. Those skilled in the art will be able to judge the appropriate time and pressure based on these parameters. Those practicing the invention may also ascertain the most appropriate time and pressure by visual inspection during the sealing process with the use of transparent molds through which the resin progress can be seen in the topmost layer of the assembly.

A variety of suitable encapsulating materials 220 can be used in accordance with the invention. Preferably, a resin material that is compatible with raised features 112, 212, 312 is used to form an adhesive seal therewith. Those skilled in the art will appreciate that any suitable encapsulating material can be used. The resin or sealant used for encapsulation is selected such that it has the required chemical and mechanical properties for the conditions found in an operating fuel cell system (oxidative stability, for example). Appropriate resins / sealants include both thermoplastics and thermoset elastomers. Preferred thermoplastics include thermoplastic olefin elastomers, thermoplastic, polyurethanes, plastomers, polypropylene, polyethylene, polytetrafluoroethylene, fluorinated polypropylene and polystyrene. Preferred thermoset elastomers include epoxy resins, urethanes, silicones, fluorosilicones, and vinyl esters.

As further shown in Fig. 6, encapsulation channels 223 are be formed in the top and bottom surfaces of a plate body 204, which surround opening 208 and other portions of manifold 218 to effectively seal against fuel and oxidant deviating from the intended flow path in manifold 218 into fields 210, 224. A portion 223b of channels 223 isolates the edge of MEA 216 proximate to o-ring 212. As also shown in Fig. 6, o-rings 212 may partially or completely block encapsulating material 220 from flowing into opening 208.

As will be appreciated, it is not necessary for a flow obstruction in accordance with the invention to completely block encapsulating material from entering the opening. It is sufficient that the flow obstruction inhibit the flow of encapsulating material into the manifold to an extent that leaves the manifold substantially free of obstructions. For example, in Fig. 5, a small gap in the form of a tortuous flow path is shown between raised feature 312 and the raised mating feature 313. It is possible for a fluid (especially a gas) to communicate across the tortuous path of the flow obstruction between features 312 and 313. However, if the viscosity of the encapsulating material is sufficient and/or the material is caused to cure as it approaches opening 108, there will not be a significant flow of encapsulating material through the flow obstruction 312, 313.

It is even possible that a small amount of encapsulating material could fill the tortuous gap and even protrude into the manifold. This would create a small bump or ridge on the generally cylindrical plenum wall defined by openings 308, however the efficiency of fuel cell stack 300 would not be significantly affected thereby as long as encapsulating material does not substantially obstruct channels 322, for example. Having encapsulating material fill the gap between features 312 and 313 can actually be favorable in creating the needed seal inside manifold 318, as well as to help electrically insulating adjacent plates 302 from each other.

As will be appreciated by those skilled in the art, the encapsulating material may be hardened, either by cooling of a thermoplastic resin or curing in the case of a thermoset resin. The encapsulating material can be cured, partially cured, or thickened to help ensure the effectiveness of the flow obstructing geometry in preventing excessive travel of the material into the manifolds as described herein. Several methods can be utilized to accomplish this. For example, a heated gas may be passed through the manifold during molding. By way of further example, the separator plates of the stack may be preheated in the manifold areas, for example, by way of heated inserts which may be removed or left in place during molding.

With reference to Figs. 4 and 5, aside from features 312 and 313, fuel cell stack 300 is generally similar to stacks 100 and 200 described above, in that fuel cell stack 300 includes separator plates 302, each of which encloses a coolant flow field 326 at a plate-to plate-interface 328. MEA 316 is arranged between adjacent plates 302, thus being in contact with fuel flow field 310 on one side and oxidant flow field 324 on the opposite side. Openings 308 communicate with fuel and oxidant flow fields 310, 324 as well as coolant flow field 326, through channels 322.

A method for making a fuel cell stack includes providing a bipolar plate assembly including two plate bodies, wherein a first separator plate body includes a first generally planar face. A first opening is defined by the first plate body for passage of a reactant therethrough. The first face has a first reactant flow field defined thereon. A first raised surface is disposed or formed on the first face, substantially surrounding the first opening. The method further includes disposing a first side of a first MEA in communication with the first reactant flow field. The method also includes disposing a second fuel cell separator plate body having a second generally planar face in communication with a second side of the MEA to form a stack. The second face includes a second opening defined by the second plate body for passage of a reactant therethrough. A second reactant flow field is defined on the second face. A receiving surface is disposed or formed on the second face substantially surrounding the opening. The first raised surface and receiving surface interfit to define a flow obstruction. The method also includes encapsulating the stack about its periphery using an encapsulating material, wherein the encapsulating material is substantially prevented from flowing into the opening defined by the first plate body by the flow obstruction.

For purposes of illustration and not limitation, as embodied herein and as depicted in Figs. 1-6, a first fuel cell separator plate body of a first bipolar plate assembly having a generally planar face is provided (e.g. plate body 104). A first opening (e.g. 108, 208, 308) is defined in the first plate body. A reactant flow field (e.g. fuel flow field 110, 210, 310) is defined on the first face of the plate body. Also, a first raised surface (e.g. 112, 212, 312) is disposed or formed on the first face. The first raised surface substantially surrounds the first opening. The flow field, opening, and raised surface can all be formed in the provided plate body by processes well known in the art.

In further accordance with the invention, the method includes the additional step of disposing a first side of a first MEA (e.g. 116, 216, 316) in communication with the first reactant flow field, as described above. Suitable MEA materials and configurations will be readily apparent to those skilled in the art.

In further accordance with the method of the invention, the method also includes disposing a second fuel cell separator plate body (e.g. 104) having a second generally planar face in communication with a second side of the MEA. The second plate body defines a second opening (e.g. 108, 208, 308) for passage of a reactant therethrough. A second reactant flow field (e.g. 124, 224, 324) is defined on the second face. A receiving surface is disposed or formed on the second face substantially surrounding the opening. The first raised surface and receiving surface interfit to define a flow obstruction, as described above in conjunction with stacks 100, 200, and 300.

The method in accordance with the invention also includes encapsulating the stack about its periphery using an encapsulating material (e.g. 220), as shown for example in Fig. 6. By way of example and not limitation, the stack (e.g. 100, 200, 300) can be placed in a mold and resin can be infused into the mold by known techniques to encapsulate the stack. The encapsulating material is substantially prevented from flowing into the opening defined by the first plate body by the flow obstruction, as described above with reference to stacks 100, 200, and 300. It is possible, for example, to move encapsulating material in to seal the flow obstruction by applying a vacuum to the plenum formed by the openings (e.g. 108) and/or by applying pressure to the resin. As will be appreciated, the method in accordance with the invention can include any other suitable step for making the fuel cell stacks described above.

The method and fuel cell stacks described above in conjunction with Figs. 1-6 provide several advantages over the state of the art in fuel cell manufacturing. Since the manifold features are provided within the separator plates, there is no need for manufacturing complex external manifolds. Moreover, due to the use of encapsulating material, which seals the manifold and encases the stack, tolerances (e.g. surface finish, geometric tolerances, allowable draft angle, allowable edge radii, etc.) on the individual plates can be relaxed somewhat. Also, less post-machining is required. Therefore, manufacturing fuel cell stacks in accordance with the present invention is a simpler and less expensive alternative to conventional stack manufacturing methods.

According to a comparative example, a fuel cell stack is provided including a bipolar plate assembly having a first generally planar fuel cell separator plate body. The first generally planar plate body has a first generally planar face that defines a first reactant flow field. A second generally planar face defines a first opening through the plate body to the first face and a first open channel in the second planar face extending from the opening toward a periphery of the plate. The first flow field, first opening, and first open channel define a first fluid flow path. The fuel cell stack further includes a first MEA having a first face in operable communication with the first reactant flow field. A reactant manifold is in fluid communication with the reactant flow field by way of the first fluid flow path. The reactant manifold is adapted and configured to facilitate transport of a reactant through the fuel cell stack. A layer of encapsulating material is disposed about the separator plate, MEA, and reactant manifold. The reactant manifold is bounded at least in part by the encapsulating material.

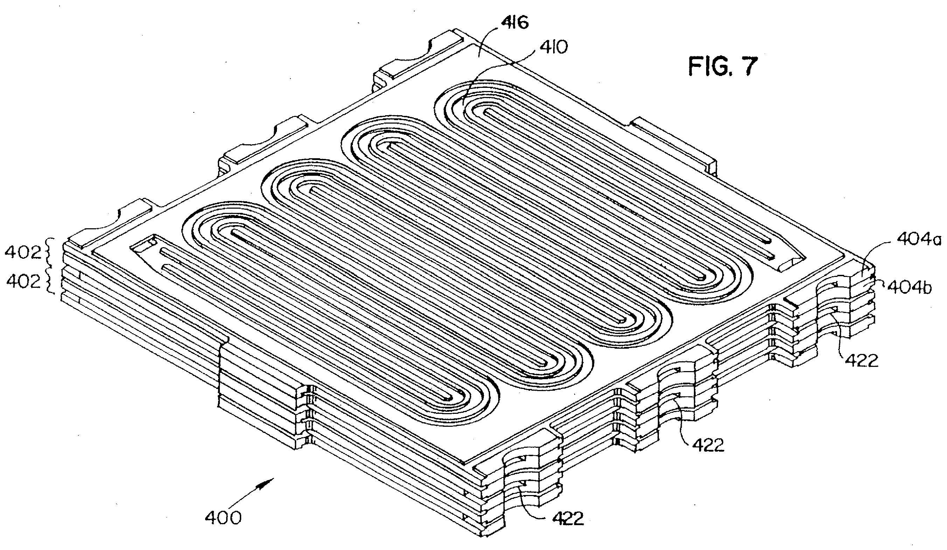

For purpose of explanation and illustration, and not limitation, views of an exemplary implementation of the fuel cell stack made in accordance with this comparative example are depicted in Figs. 7-10.

With reference now to Fig. 7, a bipolar plate assembly 402 is provided including a first generally planar plate body 404a. A second generally planer plate body 404b is also shown in Fig. 4. This second plate body may be integrally joined back to back with plate body 404a. Plate bodies 404a, 404b are preferably joined together with a conductive, adhesive seal formed therebetween. Appropriate sealing materials include resin materials that are chemically compatible with the materials of plate bodies 404a,b, and other suitable adhesive materials known in the art. Such materials may also be used to seal together the plate bodies of the embodiment of Figs. 1-6. Each plate body 404 has a first generally planar face defining a first reactant flow field 410, which is similar to the flow fields (e.g. 110) described above with reference to fuel cell stacks 100, 200, and 300.

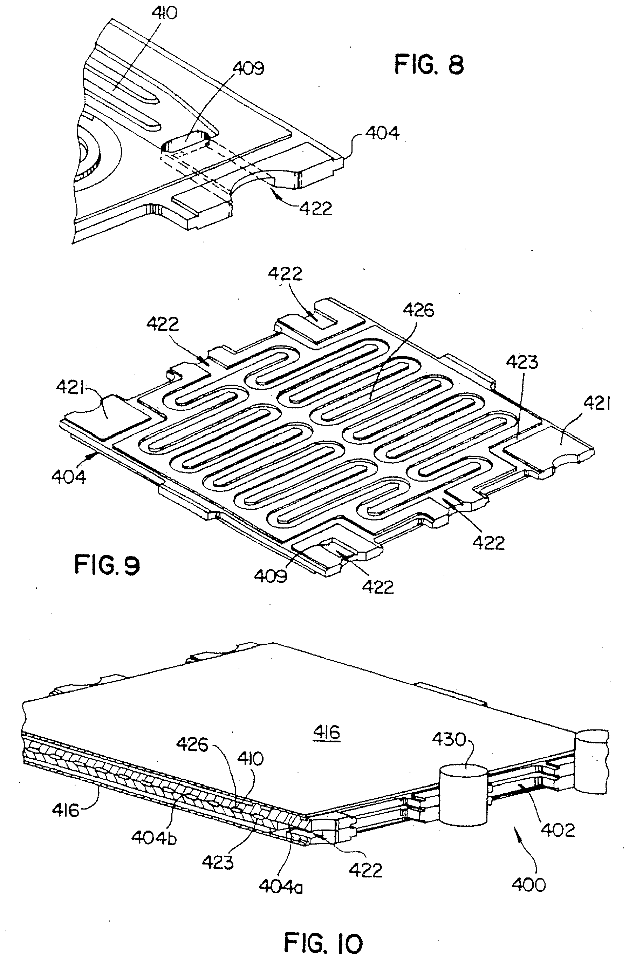

As shown in Fig. 8, each plate body 404 includes a second generally planar face that defines a first opening 409 through the plate body 404. Opening 409 communicates from the second face to the flow field 410 defined in the first face. A first open channel 422 extends from opening 409 to the edge of plate body 404. Thus, there is a flow path starting from the edge of plate body 404, through first channel 422 and opening 409, and into flow field 410.

With reference now to Fig. 9, each plate body 409 has coolant flow field 426 defined on the face opposite of flow field 410. When two plate bodies 404 are joined, as shown in Fig. 10, coolant channels are formed by the joining of the two coolant flow fields 426. Coolant flow fields, and use of coolant in general, are optional. The invention can be suitably practiced without coolant fields, however, those skilled in the art will readily appreciate the advantages of controlling temperatures in fuel cell stack 400 by use of coolant channels. Various bonding methods may be selectively employed to join plate bodies 404, as long as the bonding agent and location also creates a sealed interface between the various areas of the plate in the plate-to-plate region. Alternately, the design allows for no plate bonding to be used, since all of the necessary seals may be created at the encapsulation step.

With continuing reference to Fig. 9, channels 422 can be seen. The channels 422 in opposite corners of plate body 404 as shown in Fig. 9 serve for ingress and egress of a reactant fluid to and from reactant flow field 410, shown in Figs. 7-8. When two plate bodies 404 are mated to form a bipolar plate assembly 402, corner channels 422 in each plate are mated with flat channel surfaces 421 in the other plate. The channel 422 in the center (communicating with the coolant flow fields 426) of one plate body 404 mate with center channels 422 in the opposite plate body 404. Those skilled the art will readily appreciate that the channel configuration used in the center channels 422, namely wherein channels 422 are matched with each other across mated plates 404 rather than matched with flat surfaces 421, will also work in the corner channels (see e.g. channel 222 in Fig. 2), and vice versa.

With reference now to Figs. 7 and 10, MEA 416 is disposed on each of plate bodies 404a and 404b. Each MEA 116 has a face that is in operable, fluid communication with a reactant flow field 410, as described above with reference to fuel cell stacks 100, 200, and 300.

For purposes of illustration and not limitation, and with reference to Figures. 6-10, fuel cell stack 400 includes a reactant manifold in fluid communication with reactant flow field 410 through the opening 409 and channel 422. A layer of encapsulating material (for reference, see Fig. 6) is disposed about the separator plate, MEA, and reactant manifold. The reactant manifold is thus bounded at least in part by the encapsulating material.

The reactant manifold is designed to conduct fuels, oxidants, and coolants through fuel cell stack 400, as described above. The manifold can be made using features defined in the separator plates, such as openings 108, 208, and 308, etc., as described above. As depicted in Fig. 10, however, fuel cell stack 400 has a manifold that is formed largely of an encapsulating material molded around stack 400. Plenum molding inserts 430 are shown in Fig. 10 partially embraced by concavities in the edges of separator plate 402. Inserts 430 thereby block the openings into channels 422 in separator plate 402 for purposes of molding. After stack 400 is encased in encapsulating material, and after plenum molding inserts 430 are removed, a manifold will have been formed, as described in detail in co-pending U.S. Patent Application Serial Nos. 11/784,941 and 11/786,082.

Encapsulation channels 423 are shown surrounding corner channels 422 in Fig. 9. The ends of each encapsulation channel 423 reach edges of plate body 404. Channels 423 can be infused during the main molding process, or can be molded separately, to help seal reactant flow fields 410 from coolant flow fields 426 as described above. Channels 423 surround openings 409, however, it is also possible to use channels 423 that only partially surround openings 409, or to implement the fuel cell stack 400 without channels 423 altogether, as long as the sealing function between openings 409 and flow field 426 is retained.

Another advantage of fuel cell stack 400 is that plate bodies 404 can all be substantially identical. Moreover, side-holes do not need to be drilled into the plates, because they are formed by the cooperation of channels/surfaces defined in the individual mated plate bodies, while cooling layers are provided at every cell. As with cell stacks 100, 200, and 300, the use of encapsulating material to seal and/or form part of the manifold allows for relaxed tolerances in plate bodies 404.

A further example of a method for making a fuel cell stack includes providing a bipolar plate assembly that has a first generally planar plate body having a first generally planar face defining a first reactant flow field. A second generally planar face defines a first opening through the plate to the first face and a first open channel in the second planar face extending from the opening toward a periphery of the plate. The first flow field, first opening and first open channel define a first fluid flow path. The method includes positioning a first MEA in operable communication with the first reactant flow field. The method further includes encapsulating the separator plate and MEA in a layer of encapsulating material. A reactant manifold is defined at least in part by the encapsulating material. The reactant manifold is adapted and configured to facilitate transport of a reactant through the fuel cell stack.

For purposes of illustration and not limitation, and as depicted in Figs. 1-10, a first fuel cell bipolar plate assembly (e.g. 102, 202, 302, 402) is provided. The bipolar plate assembly includes a first generally planar plate body (e.g. 104, 204, 304, 404), which includes a first generally planar face (e.g. 106) defining a first reactant flow field (e.g. 110, 210, 310, 410). A second generally planar face (e.g. 113) defines a first opening (e.g. 108, 208, 308, and the net shape created by part 430 during the molding process) through the plate to the first face and a first open channel (e.g. 122, 222, 322, 422) in the second planar face extending from the opening toward a periphery of the plate. The first flow field, first opening, and first open channel define a first fluid flow path.

In the method of the illustrated example, an MEA (e.g. 116, 216, 316, 416) is positioned in operable communication with the first reactant flow field. With the MEA in place, the step of encapsulating the separator plate and MEA in a layer of encapsulating material (e.g. 220) is performed. At least a part of a reactant manifold (e.g. 118, 218) is defined by the encapsulating material. The manifold can be of the type described above with reference to stack 400 shown in Fig. 10, in which plenum inserts are used to keep encapsulating material from entering the channels during molding. It is also possible for the manifold to be of the type described above with reference to stacks 100, 200, and 300, in which the plates include most of the manifold features before being encased in encapsulating materials.

The methods and systems of the present invention, as described above and shown in the drawings, provide for a fuel cell stack with superior properties including ease of manufacture. It will be apparent to those skilled in the art that various modifications and variations can be made in the device and method of the present invention.

## Claims

1. A fuel cell stack (100; 200; 300) comprising:
a) at least one bipolar plate assembly (102; 202; 302) including:
- a first generally planar plate body (104; 204; 304; 404) having a first generally planar face and a second generally planar face opposed to the first face,
- a second generally planar plate body (104; 204; 304) having a third generally planar face opposed to the second face;
the first face including:
i) a first opening (108; 208; 308) defined by the first plate body for passage of a reactant therethrough;
ii) a first reactant flow field (110; 124; 210; 224; 310; 324) defined thereon; and
iii) a first raised surface (112; 212; 312) raised above the first face and individually surrounding the first opening, the first raised surface being adapted and configured to mate with a receiving surface on a generally planar face of an adjacent bipolar plate assembly, wherein the first raised surface (112; 212; 312) and the receiving surface on the face of the adjacent bipolar plate assembly create a flow obstruction when the first raised surface and the fourth generally planar surface on the face of the adjacent bipolar plate assembly are mated;
wherein the second face and the third face define a channel (122; 222; 323) in a surface of the second face that further extends through the first plate body (104; 204; 304) from the second face to the first face to connect the first reactant flow field to the first opening;
b) a first membrane electrode assembly (116; 216; 316) in operable communication with the first reactant flow field (110; 124; 210; 224; 310; 324);
c) a reactant manifold (118; 218) in fluid communication with the first reactant flow field (110; 124; 210; 224; 310; 324) by way of the channel, the reactant manifold (118; 218) being adapted and configured to facilitate transport of a reactant through the fuel cell stack (100; 200; 300); and
d) a layer of encapsulating material (220) infused into a periphery of the fuel cell stack between the first face and the generally planar face of the adjacent bipolar plate assembly to extend from the periphery to the flow obstruction and surround the first opening, wherein the encapsulating material (220) is substantially prevented from flowing into the first opening (108; 208; 308) defined by the first plate body by the flow obstruction and wherein the encapsulating material seals the manifold (118; 218) and encases the fuel cell stack (100; 200; 300).

2. The fuel cell stack (100; 200; 300) of Claim 1, wherein the first raised surface (112; 212; 312) fully surrounds the first opening.

3. The fuel cell stack (100; 200; 300) of Claim 1, wherein the first raised surface (112; 212; 312) includes at least one interruption therein along its extent.

4. The fuel cell stack (100; 200; 300) of Claim 1, wherein the first raised surface comprises an electrically insulating material that is different from the material of the first generally planar plate body and from the material of the adjacent bipolar plate assembly.

5. The fuel cell stack of Claim 4, wherein the first raised surface comprises an O-ring raised above the first face substantially surrounding the first opening.

6. The fuel cell stack (100; 200; 300) of Claim 1, wherein the first raised surface comprises a discrete component disposed between the first plate body and the second plate body and the discrete component substantially surrounds the first opening.

7. The fuel cell stack (100; 200; 300) of claim 6 wherein the discrete component comprises an electrically insulating material.

8. A method of making a fuel cell stack (100; 200; 300) comprising:
a) providing a first bipolar plate assembly including:
- a first generally planar plate body (104; 204; 304) having a first generally planar face and a second generally planar face opposed to the first face, and
- a second generally planar plate body (104; 204; 304) having a third generally planar face,
the first face including:
i) a first opening (108; 208; 308) defined by the first plate body for passage of a reactant therethrough;
ii) a first reactant flow field (110; 124; 210; 224; 310; 324) defined on the first face; and
iii) a first raised surface (112; 212; 312) raised above the first face and individually surrounding the first opening (108; 208; 308),
wherein the second face and the third face define a channel (122; 222; 323) in a surface of the second face that extends through the first plate body (104; 204; 304) from the second face to the first face to connect the first reactant flow field to the first opening;
b) disposing a first side of a first membrane electrode assembly (116; 216; 316) in communication with the first reactant flow field (110; 124; 210; 224; 310; 324);
c) disposing a second bipolar plate assembly having a fourth generally planar face in communication with a second side of the membrane electrode assembly (116; 216; 316) to form a stack, the second bipolar plate assembly including:
i) a second opening (108; 208; 308) defined by the second plate body for passage of a reactant therethrough;
ii) a second reactant flow field (110; 124; 210; 224; 310; 324) defined on the fourth face; and
iii) a receiving surface (313) on the fourth face substantially surrounding the second opening (108; 208; 308), wherein the receiving surface is one of a generally planar surface of the second bipolar plate assembly and a second raised surface raised above the fourth face and individually surrounding the second opening, wherein the first raised surface (112; 212; 312) and the receiving surface either mate or interfit to define a flow obstruction; and
d) infusing into a periphery of the fuel cell stack between the first generally planar face and the fourth generally planar face of the adjacent bipolar plate body an encapsulating material (220), thereby forming a layer of encapsulating material extending from the periphery to the flow obstruction, wherein the encapsulating material (220) is substantially prevented from flowing into the first opening defined by the first plate body by the flow obstruction and wherein the encapsulating material encases the fuel cell stack (100; 200; 300).

9. The fuel cell stack (100; 200; 300) of Claim 1 or the method of Claim 8, wherein the flow obstruction is adapted and configured to permit a gas flow therethrough prior to encapsulating material (220) being incorporated into the stack.

10. The fuel cell stack (100; 200; 300) of Claim 1 or the method of Claim 8, wherein the flow obstruction is adapted and configured to substantially prohibit a gas flow therethrough prior to encapsulating material (220) being incorporated into the stack.

11. The method of Claim 8, wherein the first raised surface (112; 212; 312) includes material that is an electrical insulator.

12. The method of Claim 8, wherein the first raised surface is composed of a material different from the first plate body and second plate body.

13. The method of Claim 8, wherein the first raised surface comprises an O-ring raised above the first face surrounding the first opening.

14. The fuel cell stack (100; 200; 300) of Claim 1 or the method of Claim 8, wherein the first raised surface constitutes a monolithic structure in combination with the first plate body.

15. The fuel cell stack (100; 200; 300) of Claim 1 or the method of Claim 8, wherein the first raised surface (112; 212; 312) is generally ring shaped.

## Patentansprüche

1. Brennstoffzellenstapel (100; 200; 300) umfassend:
a) mindestens eine bipolare Plattenanordnung (102; 202; 302), welche aufweist:
- einen ersten im Wesentlichen planaren Plattenkörper (104; 204; 304; 404) mit einer ersten im Wesentlichen planaren Fläche und einer zweiten im Wesentlichen planaren Fläche, welche der ersten Fläche gegenüberliegt,
- einen zweiten im Wesentlichen planaren Plattenkörper (104; 204; 304) mit einer dritten im Wesentlichen planaren Fläche, welche der zweiten Fläche gegenüberliegt;
wobei die erste Fläche aufweist:
i) eine erste Öffnung (108; 208; 308), welche von dem ersten Plattenkörper für einen Durchgang eines Reaktanten dadurch definiert wird;
ii) einen ersten Reaktantenfließbereich (110; 124; 210; 224; 310; 324), welcher darauf definiert ist; und
iii) eine erste erhöhte Fläche (112; 212; 312), welche über die erste Fläche erhöht ist und die erste Öffnung einzeln umgibt, wobei die erste erhöhte Fläche eingerichtet und ausgestaltet ist, zu einer Aufnahmefläche auf einer im Wesentlichen planaren Fläche von einer benachbarten bipolaren Plattenanordnung zu passen, wobei die erste erhöhte Fläche (112; 212; 312) und die Aufnahmefläche auf der Fläche der benachbarten bipolaren Plattenanordnung eine Fließbehinderung erzeugen, wenn die erste erhöhte Fläche und die vierte im Wesentlichen planare Fläche an der Fläche der benachbarten bipolaren Plattenanordnung verbunden sind;
wobei die zweite Fläche und die dritte Fläche einen Kanal (122; 222; 323) in einer Fläche von der zweiten Fläche definieren, welcher sich ferner durch den ersten Plattenkörper (104; 204; 304) von der zweiten Fläche zu der ersten Fläche erstreckt, um den ersten Reaktantenfließbereich mit der ersten Öffnung zu verbinden;
b) eine erste Membranelektrodenanordnung (116; 216; 316) in einer betriebsfähigen Verbindung mit dem ersten Reaktantenfließbereich (110; 124; 210; 224; 310; 324);
c) ein Reaktantverteilerrohr (118; 218) in einer Fließverbindung mit dem ersten Reaktantenfließbereich (110; 124; 210; 224; 310; 324) mittels des Kanals, wobei das Reaktantverteilerrohr (118; 218) eingerichtet und ausgestaltet ist, einen Transport eines Reaktanten durch den Brennstoffzellenstapel (100; 200; 300) zu ermöglichen; und
d) eine Schicht eines einkapselnden Materials (220) eingegossen in einen Umfang des Brennstoffzellenstapels zwischen der ersten Fläche und der im Wesentlichen planaren Fläche der benachbarten bipolaren Plattenanordnung, um sich von dem Umfang zu der Fließbehinderung zu erstrecken und die erste Öffnung zu umgeben, wobei das einkapselnde Material (220) durch die Fließbehinderung im Wesentlichen daran gehindert wird, in die erste Öffnung (108; 208; 308), welche von dem ersten Plattenkörper definiert wird, zu fließen, und wobei das einkapselnde Material das Verteilerrohr (118; 218) abdichtet und den Brennstoffzellenstapel (100; 200; 300) einschließt.

2. Brennstoffzellenstapel (100; 200; 300) nach Anspruch 1, wobei die erste erhöhte Fläche (112; 212; 312) die erste Öffnung vollständig umgibt.

3. Brennstoffzellenstapel (100; 200; 300) nach Anspruch 1, wobei die erste erhöhte Fläche (112; 212; 312) mindestens eine Unterbrechung darin entlang ihrer Ausdehnung aufweist.

4. Brennstoffzellenstapel (100; 200; 300) nach Anspruch 1, wobei die erste erhöhte Fläche ein elektrisch isolierendes Material umfasst, welches anders als das Material des ersten im Wesentlichen planaren Plattenkörpers und das Material der benachbarten bipolaren Plattenanordnung ist.

5. Brennstoffzellenstapel nach Anspruch 4, wobei die erste erhöhte Fläche einen O-Ring umfasst, welcher über der ersten Fläche die erste Öffnung im Wesentlichen umgebend erhöht ist.

6. Brennstoffzellenstapel (100; 200; 300) nach Anspruch 1, wobei die erste erhöhte Fläche eine diskrete Komponente umfasst, welche zwischen dem ersten Plattenkörper und dem zweiten Plattenkörper angeordnet ist, und die diskrete Komponente im Wesentlichen die erste Öffnung umgibt.

7. Brennstoffzellenstapel (100; 200; 300) nach Anspruch 6, wobei die diskrete Komponente ein elektrisch isolierendes Material umfasst.

8. Verfahren zum Herstellen eines Brennstoffzellenstapels (100; 200; 300), umfassend:
a) Bereitstellen einer ersten bipolaren Plattenanordnung, welche aufweist:
- einen ersten im Wesentlichen planaren Plattenkörper (104; 204; 304) mit einer ersten im Wesentlichen planaren Fläche und einer zweiten im Wesentlichen planaren Fläche, welche der ersten Fläche gegenüberliegt, und
- einen zweiten im Wesentlichen planaren Plattenkörper (104; 204; 304) mit einer dritten im Wesentlichen planaren Fläche,
wobei die erste Fläche aufweist:
i) eine erste Öffnung (108; 208; 308), welche von dem ersten Plattenkörper für einen Durchgang eines Reaktanten dadurch definiert wird;
ii) einen ersten Reaktantenfließbereich (110; 124; 210; 224; 310; 324) welcher auf der ersten Fläche definiert ist; und
iii) eine erste erhöhte Fläche (112; 212; 312), welche über die erste Fläche erhöht ist und einzeln die erste Öffnung (108; 208; 308) umgibt,
wobei die zweite Fläche und die dritte Fläche einen Kanal (122; 222; 323) in einer Fläche der zweiten Fläche definieren, welcher sich durch den ersten Plattenkörper (104; 204; 304) von der zweiten Fläche zu der ersten Fläche erstreckt, um den ersten Reaktantenfließbereich mit der ersten Öffnung zu verbinden;
b) Anordnen einer ersten Seite einer ersten Membranelektrodenanordnung (116; 216; 316) in Verbindung mit dem ersten Reaktantenfließbereich (110; 124; 210; 224; 310; 324);
c) Anordnen einer zweiten bipolaren Plattenanordnung mit einer vierten im Wesentlichen planaren Fläche in Verbindung mit einer zweiten Seite der Membranelektrodenanordnung (116; 216; 316), um einen Stapel auszubilden, wobei die zweite bipolare Plattenanordnung aufweist:
i) eine zweite Öffnung (108; 208; 308), welche von dem zweiten Plattenkörper für einen Durchgang eines Reaktanten dadurch definiert wird;
ii) einen zweiten Reaktantenfließbereich (110; 124; 210; 224; 310; 324), welcher auf der vierten Fläche definiert ist; und
iii) eine Aufnahmefläche (313) auf der vierten Fläche, welche im Wesentlichen die zweite Öffnung (108; 208; 308) umgibt, wobei die Aufnahmefläche eine im Wesentlichen planare Fläche der zweiten bipolaren Plattenanordnung oder eine zweite erhöhte Fläche, welche erhöht über der vierten Fläche ist, ist und die zweite Öffnung einzeln umgibt, wobei die erste erhöhte Fläche (112; 212; 312) und die Aufnahmefläche entweder ineinander greifen oder zusammenpassen, um eine Fließbehinderung zu definieren; und
d) Eingießen eines einkapselnden Materials (220) in einen Umfang des Brennstoffzellenstapels zwischen der ersten im Wesentlichen planaren Fläche und der vierten im Wesentlichen planaren Fläche des benachbarten bipolaren Plattenkörpers, wodurch eine Schicht eines einkapselnden Materials ausgebildet wird, welche sich von dem Umfang zu der Fließbehinderung erstreckt, wobei das einkapselnde Material (220) im Wesentlichen von der Fließbehinderung daran gehindert wird, in die erste Öffnung, welche von dem ersten Plattenkörper definiert wird, zu fließen, und wobei das einkapselnde Material den Brennstoffzellenstapel (100; 200; 300) einschließt.

9. Brennstoffzellenstapel (100; 200; 300) nach Anspruch 1 oder Verfahren nach Anspruch 8, wobei die Fließbehinderung eingerichtet und ausgestaltet ist, einen Gasfluss dadurch, bevor einkapselndes Material (220) in den Stapel eingebracht wird, zu ermöglichen.

10. Brennstoffzellenstapel (100; 200; 300) nach Anspruch 1 oder Verfahren nach Anspruch 8, wobei die Fließbehinderung eingerichtet und ausgestaltet ist, im Wesentlichen einen Gasfluss dadurch, bevor einkapselndes Material (220) in den Stapel eingebracht wird, zu verhindern.

11. Verfahren nach Anspruch 8, wobei die erste erhöhte Fläche (112; 212; 312) ein Material aufweist, welches ein elektrischer Isolator ist.

12. Verfahren nach Anspruch 8, wobei die erste erhöhte Fläche aus einem Material gebildet wird, welches sich von dem ersten Plattenkörper und dem zweiten Plattenkörper unterscheidet.

13. Verfahren nach Anspruch 8, wobei die erste erhöhte Fläche einen O-Ring umfasst, welcher über der ersten Fläche die erste Öffnung umgebend erhöht ist.

14. Brennstoffzellenstapel (100; 200; 300) nach Anspruch 1 oder Verfahren nach Anspruch 8, wobei die erste erhöhte Fläche eine monolithische Struktur in Verbindung mit dem ersten Plattenkörper bildet.

15. Brennstoffzellenstapel (100; 200; 300) nach Anspruch 1 oder Verfahren nach Anspruch 8, wobei die erste erhöhte Fläche (112; 212; 312) im Wesentlichen ringförmig ist.

## Revendications

1. Empilement de piles à combustible (100 ; 200 ; 300) comprenant :
a) au moins un assemblage de plaques bipolaires (102 ; 202 ; 302) incluant :
- un premier corps de plaques généralement planes (104 ; 204 ; 304 ; 404) ayant une première face généralement plane et une deuxième face généralement plane opposée à la première face,
- un second corps de plaques généralement planes (104 ; 204 ; 304) ayant une troisième face généralement plane opposée à la deuxième face ;
la première face comprenant :
i) une première ouverture (108 ; 208 ; 308) définie par le premier corps de plaques pour le passage d'un réactif à travers celle-ci ;
ii) un premier champ de flux de réactif (110; 124 ; 210 ; 224 ; 310 ; 324) qui y est défini ; et
iii) une première surface surélevée (112 ; 212; 312) qui est surélevée au-dessus de la première face et entourant individuellement la première ouverture, la première surface surélevée étant adaptée et configurée pour s'apparier avec une surface réceptrice sur une face généralement plane d'un assemblage de plaques bipolaires adjacentes, dans lequel la première surface surélevée (112 ; 212; 312) et la surface réceptrice sur la face de l'assemblage de plaques bipolaires adjacentes créent un obstacle de flux lorsque la première surface surélevée et la quatrième surface généralement plane sur la face de l'assemblage de plaques bipolaires adjacentes sont appariées ;
dans lequel la deuxième face et la troisième face définissent un canal (122 ; 222 ; 323) dans une surface de la deuxième face qui s'étend en outre à travers le premier corps de plaques (104 ; 204 ; 304) de la deuxième face à la première face pour raccorder le premier champ de flux de réactif à la première ouverture ;
b) un premier assemblage d'électrodes à membrane (116 ; 216 ; 316) en communication opératoire avec le premier champ de flux de réactif (110 ; 124 ; 210 ; 224 ; 310 ; 324) ;
c) un collecteur de réactif (118 ; 218) en communication fluidique avec le premier champ de flux de réactif (110 ; 124 ; 210 ; 224 ; 310 ; 324) au moyen du canal, le collecteur de réactif (118 ; 218) étant adapté et configuré pour faciliter le transport d'un réactif à travers l'empilement de piles à combustible (100 ; 200 ; 300) ; et
d) une couche de matériau d'encapsulation (220) injectée dans une périphérie de l'empilement de piles à combustible entre la première face et la face généralement plane de l'assemblage de plaques bipolaires adjacentes pour s'étendre depuis la périphérie vers l'obstacle de flux et entourer la première ouverture, dans lequel le matériau d'encapsulation (220) est sensiblement empêcher de s'écouler dans la première ouverture (108 ; 208 ; 308) définie par le premier corps de plaques par l'obstacle de flux et dans lequel le matériau d'encapsulation étanche le collecteur (118 ; 218) et enserre l'empilement de piles à combustible (100 ; 200 ; 300).

2. Empilement de piles à combustible (100 ; 200; 300) selon la revendication 1, dans lequel la première surface surélevée (112 ; 212; 312) entoure complètement la première ouverture.

3. Empilement de piles à combustible (100 ; 200; 300) selon la revendication 1, dans lequel la première surface surélevée (112 ; 212; 312) comporte au moins une interruption le long de son étendue.

4. Empilement de piles à combustible (100 ; 200; 300) selon la revendication 1, dans lequel la première surface surélevée comprend un matériau électriquement isolant qui est différent du matériau du premier corps de plaques généralement planes et du matériau de l'assemblage de plaques bipolaires adjacentes.

5. Empilement de piles à combustible selon la revendication 4, dans lequel la première surface surélevée comprend un joint torique surélevé au-dessus de la première face entourant sensiblement la première ouverture.

6. Empilement de piles à combustible (100 ; 200; 300) selon la revendication 1, dans lequel la première surface surélevée comprend un composant discret disposé entre le premier corps de plaques et le second corps de plaques et le composant discret entoure sensiblement la première ouverture.

7. Empilement de piles à combustible (100 ; 200; 300) selon la revendication 6, dans lequel le composant discret comprend un matériau électriquement isolant.

8. Procédé de fabrication d'un empilement de piles à combustible (100 ; 200 ; 300) comportant :
a) la fourniture d'un premier assemblage de plaques bipolaires comportant :
- un premier corps de plaques généralement planes (104 ; 204 ; 304) ayant une première face généralement plane et une deuxième face généralement plane opposée à la première face, et
- un second corps de plaques généralement planes (104 ; 204 ; 304) ayant une troisième face généralement plane,
la première face comprenant :
i) une première ouverture (108 ; 208 ; 308) définie par le premier corps de plaques pour le passage d'un réactif à travers celle-ci ;
ii) un premier champ de flux de réactif (110; 124; 210; 224; 310 ; 324) défini sur la première face ; et
iii) une première surface surélevée (112 ; 212; 312) qui est surélevée au-dessus de la première face et entourant individuellement la première ouverture (108 ; 208 ; 308),
dans lequel la deuxième face et la troisième face définissent un canal (122 ; 222 ; 323) dans une surface de la deuxième face qui s'étend à travers le premier corps de plaques (104 ; 204 ; 304) de la deuxième face à la première face pour raccorder le premier champ de flux de réactif à la première ouverture ;
b) la disposition d'un premier côté d'un premier assemblage d'électrodes à membrane (116 ; 216 ; 316) en communication avec le premier champ de flux de réactif (110 ; 124 ; 210 ; 224 ; 310 ; 324) ;
c) la disposition d'un second assemblage de plaques bipolaires ayant une quatrième face généralement plane en communication avec le second côté de l'assemblage d'électrodes à membrane (116 ; 216 ; 316) pour former un empilement, le second assemblage de plaques bipolaires comportant :
i) une seconde ouverture (108 ; 208 ; 308) définie par le second corps de plaques pour le passage d'un réactif à travers celles-ci ;
ii) un second champ de flux de réactif (110 ; 124 ; 210 ; 224 ; 310 ; 324) défini sur la quatrième face ; et
iii) une surface réceptrice (313) sur la quatrième face entourant sensiblement la seconde ouverture (108 ; 208 ; 308), dans lequel la surface réceptrice est une parmi une surface généralement plane du second assemblage de plaques bipolaires et une seconde surface surélevée au-dessus de la quatrième face et entourant individuellement la seconde ouverture, dans lequel la première surface surélevée (112 ; 212 ; 312) et la surface réceptrice s'apparient ou s'imbriquent pour définir un obstacle de flux ; et
d) l'injection d'un matériau d'encapsulation (220) dans une périphérie de l'empilement de piles à combustible entre la première face généralement plane et la quatrième face généralement plane du corps de plaques bipolaires adjacentes, en formant de la sorte une couche de matériau d'encapsulation s'étendant de la périphérie à l'obstacle de flux, dans lequel le matériau d'encapsulation (220) est sensiblement empêché de s'écouler dans la première ouverture définie par le premier corps de plaques par l'obstacle de flux et dans lequel le matériau d'encapsulation enserre l'empilement de piles à combustible (100 ; 200 ; 300).

9. Empilement de piles à combustible (100 ; 200; 300) selon la revendication 1 ou procédé selon la revendication 8, dans lequel l'obstacle de flux est adapté et configuré pour permettre un flux de gaz à travers pile celui-ci avant que le matériau d'encapsulation (220) ne soit incorporé à l'empilement.

10. Empilement de piles à combustible (100 ; 200 ; 300) selon la revendication 1 ou procédé selon la revendication 8, dans lequel l'obstacle de flux est adapté et configuré pour empêcher sensiblement un flux de gaz à travers celui-ci avant que le matériau d'encapsulation (220) ne soit incorporé à l'empilement.

11. Procédé selon la revendication 8, dans lequel la première surface surélevée (112 ; 212 ; 312) comprend un matériau qui est un isolant électrique.

12. Procédé selon la revendication 8, dans lequel la première surface surélevée est composée d'un matériau différent de ceux du premier corps de plaques et du second corps de plaques.

13. Procédé selon la revendication 8, dans lequel la première surface surélevée comprend un joint torique surélevé au-dessus de la première face entourant la première ouverture.

14. Empilement de piles à combustible (100 ; 200 ; 300) selon la revendication 1 ou procédé selon la revendication 8, dans lequel la première surface surélevée constitue une structure monolithique en combinaison avec le premier corps de plaques.

15. Empilement de piles à combustible (100 ; 200 ; 300) selon la revendication 1 ou procédé selon la revendication 8, dans lequel la première surface surélevée (112 ; 212 ; 312) a une forme générale annulaire.
